(19) Europäisches Patentamt
European Patent Office
Office européen des brevets

(11) **EP 1 965 219 A1**

(12) **EUROPEAN PATENT APPLICATION**

(43) Date of publication:
**03.09.2008 Bulletin 2008/36**

(51) Int Cl.:
**G01S 1/00** (2006.01)

(21) Application number: **07425114.1**

(22) Date of filing: **01.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Selex Communications S.P.A.**
**16151 Genova (IT)**

(72) Inventors:
• **Grosso, Giovanni**
**16153 Genova (IT)**

• **Zanchet, Silvio**
**17028 Spotorno (Savona) (IT)**
• **Sgroi, Daniele**
**17100 Savona (IT)**

(74) Representative: **Deambrogi, Edgardo et al**
**Jacobacci & Partners S.p.A.**
**Corso Emilia, 8**
**10152 Torino (IT)**

(54) **Method and system for predicting the performance of satellite navigation systems**

(57)    Method for predicting the performance of a satellite navigation system, comprising at least one constellation of satellites for a GNSS receiver. The method comprises the operations of determining first data (5), indicating the requirements of accuracy, continuity, integrity and availability of the system, and determining second data (6), indicating the number of satellites in the constellation and the corresponding probabilities of failure, required in order to use a predetermined RAIM method for monitoring the system. The method is characterized in that it additionally comprises the operations of acquiring from the receiver third data (Pfa, Pmd) indicating the probability of false alarm and the probability of missed detection in accordance with the requirements, for the predetermined RAIM method, and creating a database (7) of these third data in accordance with predetermined scenarios. The method also comprises the operations of generating (2) data vectors representing the radius of uncertainty concerning the distance of the receiver from the satellites, which can be determined by the receiver as a function of the first (5), second (6) and third (Pfa, Pmd) data, creating a database (9) of these vectors, and executing a simulation of at least one of the scenarios on the basis of the vectors.

FIG.2

EP 1 965 219 A1

**Description**

The present invention relates to the prediction of the performance of a satellite navigation system.

More specifically, the invention relates to a method for predicting the requirements of accuracy, continuity, integrity and availability in a satellite navigation system provided with a GNSS receiver (Global Navigation Satellite System), as defined in the preamble of Claim 1. In particular, the present invention is applicable to navigation systems for aircraft, with reference to the control of aircraft without ground-based radio assistance in the different flight phases: take-off, navigation in remote area and in terminal area, approach, landing. At the present time there are no certified navigation systems which enable aircraft approach and landing operations to be carried out with on-board GNSS receivers only, without the aid of a ground-based radio assistance system. Such systems have been used only for navigation in remote areas and in limited classes of aircraft.

It would be desirable to extend the functionality of satellite navigation systems in all flight phases, in order to reduce the operating costs of ground-based radio assistance systems and allow a more efficient approach to navigation control in the lead-up to the development of 4D navigation methods.

The currently available methods for predicting the performance of a GNSS receiver (or of any satellite navigation system, regardless of the supporting constellation) can be used to carry out simulations for the selection of the best method for ensuring the integrity of the navigation, approach and landing process. The parameters which can be used to control navigation and the data required for the secure execution of approach and landing operations are controlled directly by new-generation GNSS receivers installed on board aircraft.

The aim of these simulation methods is to check that the performance of GNSS receivers is adequate in terms of accuracy, availability, integrity and continuity to guarantee secure air navigation in all flight phases. These four requirements are defined as follows (with reference to ICAO, Annex 10):

- accuracy: measure of the difference between the position estimated by the user and the actual position where no failures are present; for the estimate of the position at a specific location, the probability that the position error is within the requisite accuracy limits must be at least 95%;

- integrity: measure of the confidence in the correctness of the information supplied by the navigation system; it includes the capacity of the navigation system to emit alarms to the users in good time if the system must not be used for navigation; the navigation system must be capable of limiting the error in real time in any operating conditions; to ensure that the position error is acceptable, an alarm limit is defined, representing the maximum position error which can be tolerated to operate in secure conditions, and the position error must not exceed this alarm limit without being announced within a given time interval, defined as the "time-to-alert";

- continuity: ability of the system to make the navigation function available throughout the flight operation, given that the service was available at the start of the operation; the continuity is specified in terms of continuity risk, which is the probability that the procedure will be interrupted by a loss of service due to unprogrammed interruptions;

- availability: probability that the navigation and failure detection functions are operational and that the requirements of accuracy, integrity and continuity are met.

However, the available simulation methods have a lack of analytical connection between the aforementioned requirements and statistical parameters, such as the probability of false alarm or the probability of missed detection, which are required to estimate the limits of protection of the GNSS receiver and the corresponding availability in time and space. The statistical parameters are derived from the planning of the navigation system and the limits of protection are values, determined on the basis of the design of the system, which must not exceed corresponding theoretical values associated with the system if the operations of navigation, approach and landing are to be carried out safely.

Further limits of the current simulation methods generally consist of the limitation of the scenarios which can be simulated: these scenarios represent the set of all the parameters which define an operating situation, for example the flight phase, the integrity method used (such as RAIM, Galileo Integrity Channel, Satellite Based Augmentation), the type of RAIM algorithm, which may be "snapshot" or sequential, and other parameters which are defined more fully below. Current methods are also based on a single constellation, for example the GPS constellation, use only the standard "snapshot" algorithm to execute the RAIM algorithm for monitoring the navigation system, and analyse the failure of only one satellite. Moreover, these methods do not provide any support for the analysis of system degradation phenomena such as scintillation, interference or the estimate of the "outage" effect, in other words the malfunctions of the satellite due to ESD (electrostatic discharge) or streams of charged particles created by events occurring on the sun.

The "snapshot" algorithm is based on a single set of measurements, in other words on system data which are collected simultaneously. This algorithm is not optimal; in particular, its performance is limited when vertical guidance requirements are present.

There is another algorithm, known as the "sequential" algorithm, for executing the RAIM method; this uses all the past and present sets of measurements of a system, for example a GPS system. The "sequential" approach has a potential advantage over the "snapshot" approach, in that it can detect an excess position error caused by a failure with a low ratio between the size of the induced error and the size of process noise. However, no methods have been developed as yet to estimate the protection levels for this type of algorithm.

One object of the present invention is to propose an innovative method for predicting the performance of a GNSS satellite navigation system, in which the method uses only the receiver located on board the aircraft, and therefore does not require a ground-based support system.

These and other objects are achieved according to the invention with a prediction method whose principal characteristics are defined in Claim 1. Specific embodiments are described in the dependent claims.

Another object of the invention is a prediction system and a computer program as claimed.

Briefly, the substantial novelty of the present invention with respect to the prior art resides in the following:

1. The use of analytical relations between the system requirements, the simulation parameters and the performance of the system, these relations being obtainable by means of an innovative logic flow which starts from the requirements and estimates the performance, and which allows to calculate in an analytical way uncertainty normalized radii in the pseudo-range direction.
2. The application of the analytical distribution of the integrity risk between the horizontal and vertical axes, enabling the performance to be harmonized on the two axes.
3. The optimal selection of the alarm thresholds for the RAIM function for each specific flight phase and for each specific scenario, based on the aforementioned analytical relations.
4. The global nature of the scenarios for which the achievable performance can be estimated.
5. The run-time calculation of the standard deviation of the pseudo-range error associated with each satellite.
6. The provision of an analytical model which considers the effects of scintillation (rapid and significant variation of the ionospheric error) and similar effects degrading the achievable performance of the navigation system.

The invention also provides the following advantages:

1. A modular logical architecture, enabling the scenarios for simulation to be extended easily, for example by introducing new constellations.
2. The possibility of estimating in an analytical way the performance which can be achieved by combining different integrity methods.

Further characteristics and advantages of the invention will be made clear by the following detailed description, provided purely by way of non-limiting example, with reference to the attached drawings, in which:

Figure 1 is a block diagram of the overall structure of a simulation method according to the invention;
Figure 2 is a block diagram of the method of calculating the probability of false alarm, the probability of missed detection and the Tp vectors;
Figure 3 is a block diagram of the method of handling the Tp vectors; and
Figures 4, 5, and 6, taken together, form a block diagram of the phases of the simulation method according to the invention.

The simulation method according to the invention is based on the requirements of integrity, continuity, availability, accuracy and time-to-alert required for the navigation of an aircraft, for example for civil navigation in its different phases, including approach and landing. The GNSS receiver on board the aircraft contains all the probabilities of false alarm (Pfa) and the probabilities of missed detection (Pmd) stored inside it, according to all the possible requirements for a given navigation system; in particular, the continuity and integrity requirements are unique for a given flight phase. The probability of false alert (Pfa) and of missed detection (Pmd) depends on these two requirements and on the scenario. The probability of false alert (Pfa) depends on the considered integrity method and on the type of RAIM algorithm used; the probability of missed detection (Pmd) depends on the constellation in question, which may be single or combined, augmented or not; on the considered direction, which may be vertical or horizontal, and on the type of failure considered possible, which may be single or double.

The method according to the invention is designed to be applied by a system which can execute groups of modules of programs stored on disc or accessible via a network.

The first step of the simulation is the acquisition from said receiver, on the basis of the desired requirements, of the probability of false alert (Pfa) and the probability of missed detection (Pmd) for a specified RAIM algorithm, which may be "snapshot" or sequential.

A Pfa and Pmd database of these values is created in relation to various cases of simulation analysed, in other words the scenarios which can be used.

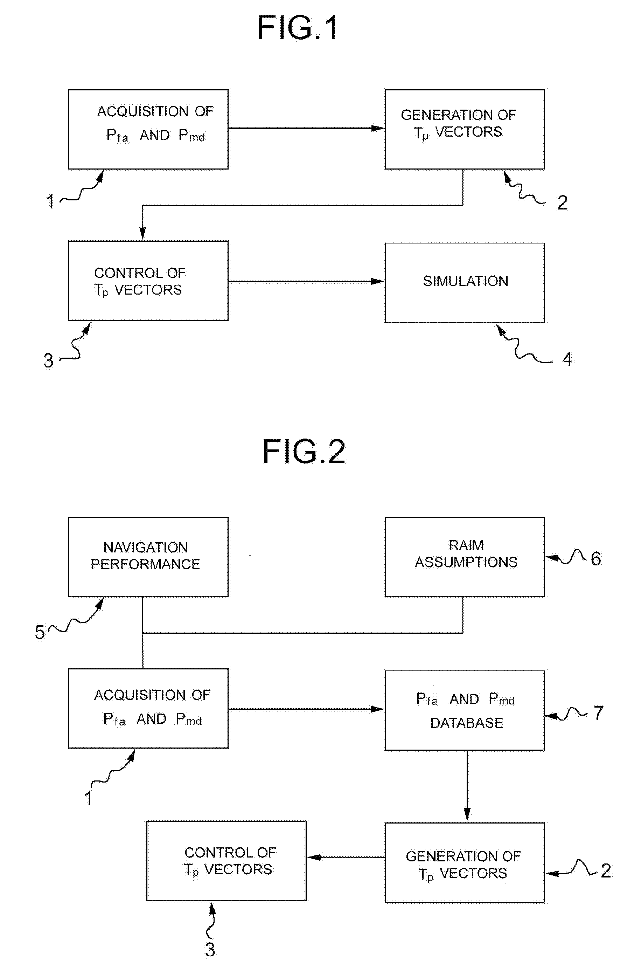

In Figure 1, the number 1 indicates a Pfa and Pmd acquisition unit which acquires the probability of false alarm and the probability of missed detection.

The probability of false alarm is derived from the specified continuity requirement, subject to the following constraint:

$$Continuity\_risk \leq (1 - continuity\_requirement) \qquad (1)$$

for a given selected phase of navigation, approach or landing.

For the case of a "snapshot" RAIM, the following formula is applicable:

$$Pfa_x = \lambda CR_x \frac{Tapp_x}{T\exp_x} \qquad (2)$$

where x denotes the considered flight phase λ is the factor for allocation of the failure probability to the GNSS receiver, $CR_x$ is the continuity risk of the flight phase in question, $Tapp_x$ is the duration of the flight phase (approach or navigation), and $Texp_x$ is the time of exposure to the risk of the selected phase, in other words the time in which the loss of the function due to a false alarm is critical.

For the case of a sequential RAIM, on the other hand, the following formula is applicable:

$$Pfa_x = CR_x \frac{3600}{T\exp_x} \frac{\delta}{Tapp_x} \qquad (3)$$

where δ is the sampling time, in seconds.

The probability of missed detection is determined according to the following equation:

$$Pmd_{x,y,z} = IR_x \frac{1}{Pfa_t} \frac{3600}{Tapp_x} \qquad (4)$$

where y denotes the type of constellation (single or combined, augmented or not), z represents the direction, which may be horizontal or vertical, for which the integrity risk is considered, t denotes the probability of a single or double failure, and IR is the integrity requirement of the flight phase in question.

After the acquisition of Pfa and Pmd, a Tp vector generation unit 2 generates the vectors representing the normalized uncertainty radius, referred to below as "Tp vectors", as will now be described.

The setting of the conditions of the probability of false alarm and missed detection in the state equation of the system in a scenario of channel noise with Gaussian distribution generates a statistical function of the chi-square distribution type; the solution of the said equation provides a value for each degree of freedom of said distribution, thus generating a vector, and permits the calculation of a "normalized pseudorange protection radius" which is the normalized uncertainty radius with which the receiver can calculate its distance (pseudorange) from a satellite; clearly, in order to find the effective uncertainty radius relating to the said satellite, the value of the normalized radius must be multiplied by the standard deviation of the error of this satellite, which is known in advance.

The degree of freedom is the difference between the number of satellites visible for the selected case at the position of the simulated GNSS receiver and the number of unknowns in the system used to determine the corresponding PVT (position, velocity, time) solution. By combining the actual uncertainty radii of the different satellites and the current space-time coordinates, and projecting the resulting value on the horizontal and vertical planes, the horizontal integrity limits (HIL) and vertical integrity limits (VIL) and the horizontal exclusion limits (HEL) and vertical exclusion limits (VEL) are found, as described below.

The Tp vectors therefore contain the normalized uncertainty radius, valid for all satellites, while the degree of freedom of the system varies for a given Pfa/Pmd pair. However, the absolute uncertainty radius varies for each satellite according to the standard deviation of the error of the satellite concerned.

The results from the Tp vector generation unit 2 are sent to a Tp vector control unit 3 which handles the Tp vector database, as described below. The output of the Tp vector control unit 3 is finally connected to a simulation unit 4 which executes the simulation for the predetermined scenario, in other words the prediction of the performance of the current system. Briefly, the simulation comprises the calculation of the integrity and exclusion levels (HIL, VIL, HEL, VEL), using the applicable Tp vector for the selected case. The element of the vector corresponding to the degree of freedom of the system is selected, and this element is multiplied by the standard deviation of the error applicable to the satellite in question, to find the absolute uncertainty radius of each satellite. The absolute uncertainty radii found in this way are converted to uncertainty radii in the horizontal and vertical directions, thus yielding two separate vectors whose dimensions are equal to the number of visible satellites; the maximum values of each vector form the horizontal integrity limits (HIL) and vertical integrity limits (VIL). The limits calculated in this way are compared with theoretical limit values associated to the system: if the calculated limits exceed said theoretical values, this means that the corresponding flight phase cannot be executed safely. It is therefore necessary, for example, to change the landing airport or to change the approach procedure.

The availability of the aircraft to provide a service, expressed in terms of availability of the accuracy and integrity, is defined as the percentage of space and time in which the following inequalities are true:

$$(HIL \leq HAL) \qquad (2)$$

$$(VIL \leq VAL) \qquad (3)$$

where HAL and VAL are the horizontal and vertical alarm limits respectively, and are known requirements of the system. This is referred to as the fault detection (FD) availability.

The continuity of the service provided, expressed in terms of continuity of the accuracy and integrity, given the availability at the start of the phase, is defined as the set of inequalities (1), (4) and (5), in which inequalities (4) and (5) are as follows:

$$(HEL \leq HAL) \ (4)$$

$$(VEL \leq VAL) \ (5)$$

This is referred to as the fault detection and exclusion availability (FDE). The FDE is very useful to determine the availability of the continuity performance during an approach when a critical failed satellite is removed.

Figure 2 is a block diagram of the acquisition of Pfa and Pmd and the calculation of the Tp vectors, based on the system requirements and the selected simulation case. This calculation is carried out on the basis of the information supplied by units 5 and 6, which correspond, respectively, to the specified navigation requirements and to the RAIM assumptions shown below:

- the mean number of satellites in the constellation;
- the probability of failure of a single satellite of a specific constellation;
- the probability of multiple failure of a specific constellation.

After the acquisition of Pfa and Pmd, the Pfa and Pmd database 7 of the said values is generated, these values then being supplied to the Tp vector generation unit 2 from which they are sent to the Tp vector control unit 3, as described above.

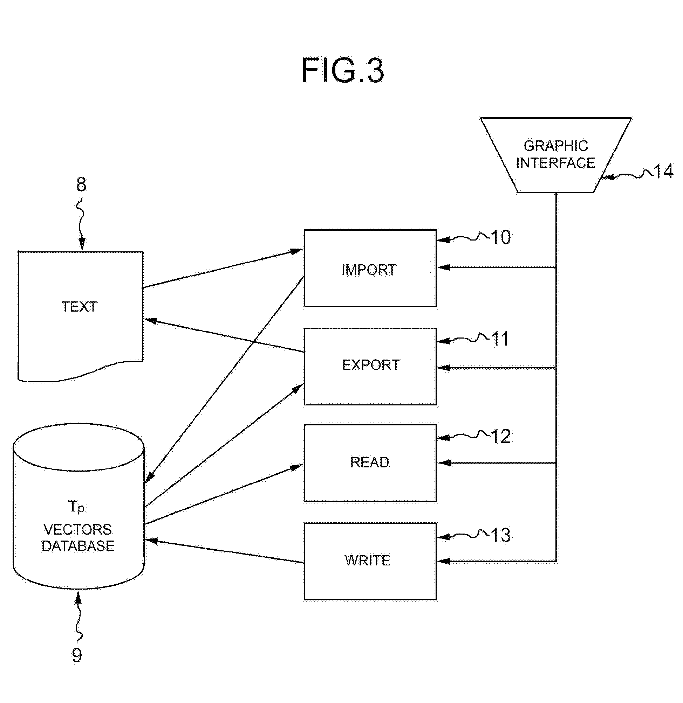

Figure 3 is a block diagram of the process of controlling the Tp vectors. This process makes the Tp vectors easily usable by the user, allowing manual access to an individual vector, or access by a computer, thus permitting the execution of automatic calculation processes. This diagram shows a test unit 8 which contains the Tp vectors in test format; these Tp vectors can be imported or exported from or to a Tp vector database unit 9. The operations of importing and exporting from the Tp vector database 9 to the test unit 8 are carried out, respectively, by an import unit 10, which collects all the vectors from the test unit 8 and sends them to the Tp vector database unit 9, and an export unit 11, which executes the reverse operation. The block diagram of Figure 3 also contains a read unit 12 and a write unit 13 which carry out, respectively, the operations of manually reading and writing the individual Tp vectors from and to the Tp vector database unit 9. Finally, a graphic interface unit 14 is provided for communication with the import unit 10, the export unit 11, the read unit 12 and the write unit 13.

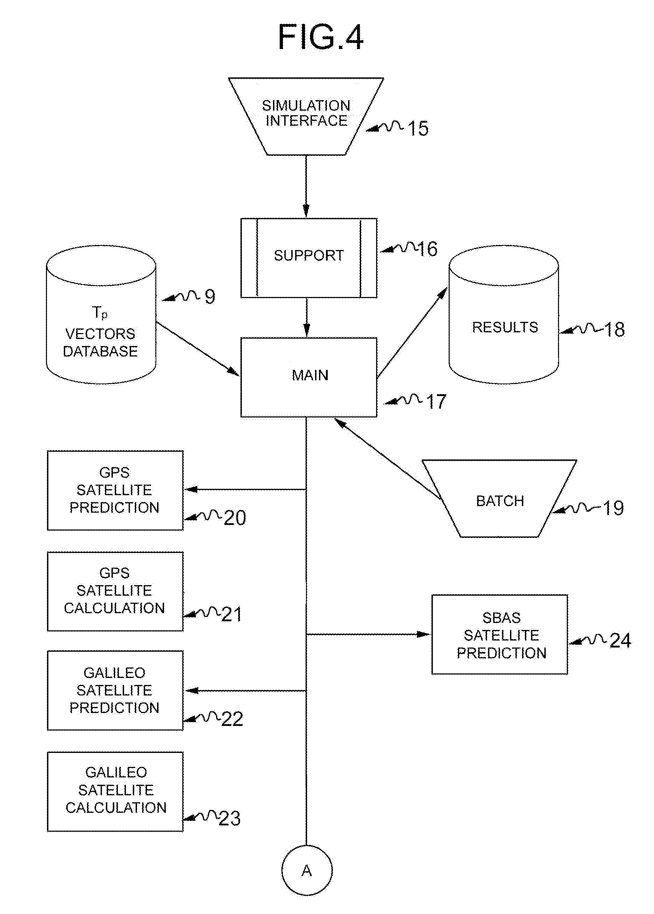

Figures 4, 5 and 6, taken together, show a block diagram of the steps of the simulation method according to the invention, which can also be interpreted as a diagram of the modules of the corresponding simulation program for execution by a computer system.

A simulation interface unit 15 is provided to enable the user to start the simulation process. The simulation interface unit 15 can communicate with a support unit 16 which contains a routine for handling said simulation interface unit 15.

The support unit 16 communicates with a main unit 17, which contains the core of the simulation process. The main unit 17 communicates the results of the simulation to a results unit 18, in the form of a database of the internal results of the simulation process. The main unit 17 uses the Tp vectors contained in the Tp vector database 9 defined above. Alternatively, the main unit 17 can execute batch simulations with the aid of a batch unit 19 which provides an automatic interface for automatically checking all the possible cases of simulation.

The main unit 17 executes the steps of the simulation, using a plurality of data supplied from a corresponding plurality of units, particularly a GPS satellite prediction unit 20, which predicts the satellites visible for the GPS constellation (the optimized constellation as described in RTCA DO-229D, Appendix B), while a subsequent GPS satellite calculation unit 21 calculates the position of the satellites of the GPS constellation predicted by the GPS satellite prediction unit 20. The logical sequence of the units specified above has the function of constructing the constellation visible at the current instant and position.

On the other hand, a Galileo satellite prediction unit 22 predicts the visible satellites for the Galileo constellation (the optimized Walker constellation as described in the Galileo MOPS), while a subsequent Galileo satellite calculation unit 23 calculates the position of the satellites of the Galileo constellation.

Meanwhile, a SBAS satellite prediction unit 24 predicts the visible satellites for the SBAS constellation.

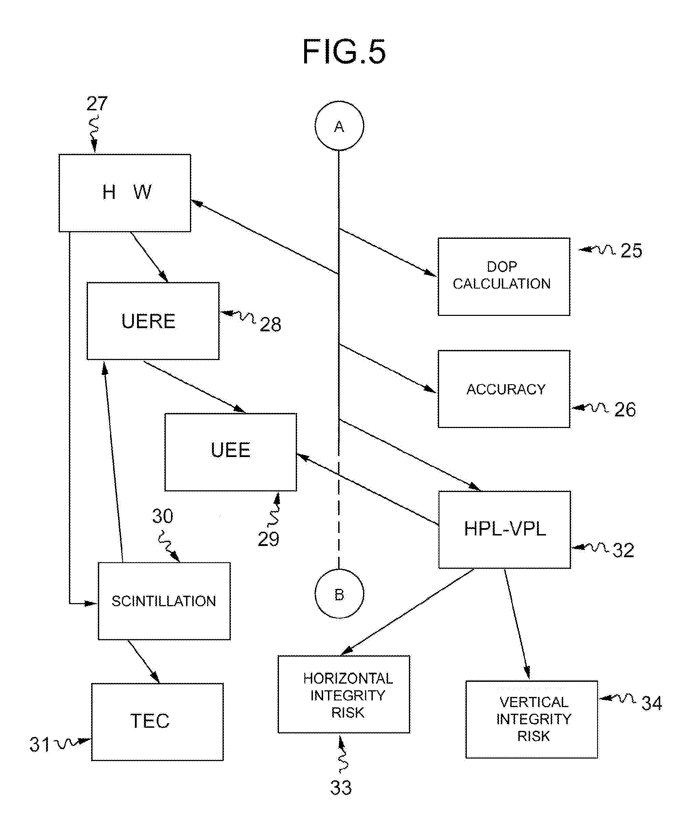

The flow of the simulation process described up to this point with reference to Figure 4 then proceeds as shown in Figure 5; a unit A present in both Figure 4 and Figure 5 represents the continuation of this flow.

At this point, the simulation method calculates the dilution of precision (DOP) by means of the DOP calculation unit 25. This DOP calculation unit 25 also calculates the position accuracy for the selected constellation.

An accuracy unit 26 calculates the position accuracy in the case of combined PVT constellations.

An HW unit 27 calculates the H and W matrices (the observation and weight matrices) for the selected constellation. The HW unit 27 uses the data obtained from a UERE unit 28 which calculates the standard deviation of the user equivalent range error (UERE) at the resulting angle of elevation of the satellite. The UERE allows for the errors due to the satellite, such as the clock errors.

In its turn, the UERE unit 28 uses the data supplied by a UEE unit 29 which calculates the standard deviation of the user equipment error (UEE) at the resulting angle of elevation of the satellite. The UEE allows exclusively for the errors due to the user.

On the other hand, the HW unit 27 uses the data obtained from a scintillation unit 30, which calculates the UERE at the resulting angle of elevation of the satellite, in case of scintillation. The scintillation unit 30 is designed to use the results of the UERE unit 28 and a TEC unit 31 which calculates the current value of the total electron content (TEC).

An HPL-VPL unit 32 calculates the horizontal and vertical protection limits (HPL/VPL) for the Galileo integrity channel (GIC). Said protection limits take account of the state of "health" of the satellites and are available for the Galileo system only. The HPL-VPL unit 32 is designed to use the data from the UEE unit 29 and from a first horizontal integrity risk unit 33, which calculates the horizontal integrity risk of the GIC for a given HAL, and from a second vertical integrity risk unit 34, which calculates the vertical integrity risk of the GIC for a given VAL.

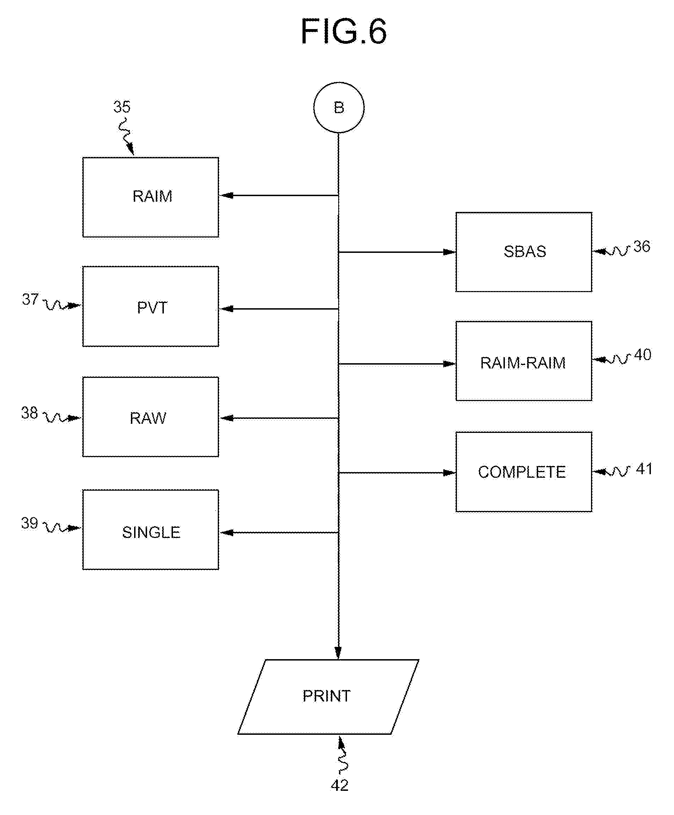

The flow of the simulation process described up to this point with reference to Figure 5 then proceeds as shown in Figure 6; a unit B present in both Figure 5 and Figure 6 represents the continuation of this flow.

Figure 6 shows a set of possible alternatives, which are selected by the user in the simulation interface unit 15. According to the selection made, the main unit 17 uses the necessary data to carry out the various operations described below.

A RAIM unit 35 executes the RAIM algorithm, using the values of HIL/VIL and HEL/VEL.

A SBAS unit 36 calculates the horizontal and vertical protection limits HPL and VPL for the GPS/SBAS constellation (augmentation).

A PVT unit 37 combines the results of the GIC and the RAIM in the case of combined PVT constellations, while a RAW unit 38 combines the results of the GIC and the RAIM in the case of raw-pseudorange-combined constellations, in other words constellations in which the set of GPS and Galileo satellites is treated as a single constellation.

On the other hand, a SINGLE unit 39 combines the results of the GIC and the RAIM in the case of a single constellation.

A RAIM-RAIM unit 40 combines the results of the RAIM in the case of combined PVT constellations, while a total unit 41 combines the results of the RAIM, GIC and SBAS in the case of combined PVT constellations.

Finally, a print unit 42 prints the results in a predetermined test format.

The simulation sequence can also simulate GNSS configurations with associated parameters and options described below.

As far as the flight phases are concerned, the simulation process supports the following standards as alternatives:

- NPA/RNP0.3
- RNP0.1
- APV-I
- APV-II
- Cat-I
- Ultra Low RNP (ULRNP)
- Cat-II
- Cat-IIIb

As regards the configurations of the GNSS receiver, these can be as follows:

- GPS L1;
- GPS L1/L5;
- Galileo L1/E5b OS (Open Service);
- GPS L1 and Galileo L1/E5b OS, PVT or raw-pseudorange-combined;
- GPS LI/LS and Galileo L1/E5b OS, PVT or raw-pseudorange-combined;
- Galileo L1/E5b SoL (Safety of Life service);
- all the aforementioned standards with the addition of the augmented SBAS (for GPS only).

The integrity methods which can be used are at present the RAIM, the integrity channel of the Galileo system (GIC) and the augmentation (SBAS). Some combinations of the aforementioned methods are also permitted.

The RAIM algorithms which can be used at present are as follows:

- Standard Snapshot LSR FD RAIM;
- Modified Snapshot LSR FD RAIM, based on the assumption of uncorrelated noise (Pre-Filtering);
- Sequential RAIM, based on the assumption of uncorrelated noise (Pre-Filtering).

By selecting the option "Modified Snapshot LSR FD RAIM - unfiltered correlated noise" it is possible to evaluate the effect of unfiltered correlated noise on the RAIM algorithm.

The preferred spatial grids supported during the simulation are as follows:

- World Grid: northern hemisphere;
- ECAC: Latitude 35°/65°, Longitude -10°/30°;
- Critical locations (1 point);
- User-defined.

The preferred time grids supported during the simulation are as follows:

- GPS: 12 hours;
- Galileo: 14 hours and 21 minutes;
- GPS and Galileo: 3 sidereal days (LMC between GPS and Galileo);
- User-defined.

The sampling rate supported by the simulator can be as follows:

- 5 minutes for simulations over the whole terrestrial hemisphere or ECAC;
- a faster rate (6 seconds) for a critical location and for "low RNP" approach phases;
- User-defined.

The masking angle defines the limit angle of elevation below which the satellite must be excluded from the solution. The preferred masking angle supported by the simulation is generally 5° for GPS satellites or 10° for Galileo satellites (Galileo MOPS). Different masking angles can be selected for satellites which are rising and for those which are setting, particularly 2° for the former and 0° for the latter. In the case of critical locations, the angle depends on the location, but is always more than 5°. However, the user can specify any desired masking angles.

The number of unknowns in the solution of the state equation of the system depends on the type of constellation and on the state of parameters as described below. In the case of a single constellation, the unknowns are always 4, namely the three spatial coordinates of the user and the difference between the clock of the receiver and that of the satellites (the space segment). In the case of combined GPS/Galileo constellations, differences may exist between the system times and between the identical frequencies of the two constellations. The first parameter is called GGTO (GPS to Galileo time offset) and may or may not be known. The second parameter is known as the interfrequency bias, and is the difference between the frequencies L1 of the two constellations, and the third parameter is the difference between the frequencies L5/E5 of the two constellations; these two parameters may or may not be known.

The simulation system supports the following preferred configurations:

- 4 unknowns: single constellation or combined constellation with GGTO available;
- 5 unknowns: combined constellation with GGTO not available;
- 6 unknowns: combined constellation with GGTO not available and interfrequency bias L1 not available;
- 7 unknowns: combined constellation with GGTO not available and interfrequency biases L1 and L5/E5 not available;

The integrity and continuity availability can vary from 99% (minimum requirement) and 99.999% (maximum requirement).

The analysis uses at least one "outage" effect model, particular a general model in which one satellite is excluded from the constellation by selecting its PRN (pseudorange number), or a "Galileo SoL service" model in which one satellite is first excluded from the constellation by selecting its PRN, and a degraded value of the SISMA (signal in space monitoring accuracy) is then set.

There are two main degradation models supported by the simulator. The first model takes into account the loss of a frequency due to interference or "jamming" (degraded models): with this option, available only for the RAIM algorithm and for combined constellations, the loss of the L1 frequency leads to the combination of GPS L5 and Galileo E5b, while the loss of L5 and E5b leads to the combination of GPS L1 and Galileo L1.

The second model takes into account the scintillation, based on the references R02 and R03. The geographical area affected by scintillation is defined, in the currently preferred embodiment, with reference to Brazil, particularly Rio de Janeiro, by the following ranges:

- latitude: [-35, -5] deg
- longitude: [-70, -40] deg.

The first step is the calculation of a TEC profile as a function of latitude, longitude and the UTC (Universal Time Coordinated) time. A TEC function is the product of two half-sinusoidal functions on the directions of latitude and longitude and of a full sinusoidal function on the UTC time axis, with allowance for the difference between local time and UTC time; there is a constraint of $30*10^{16}$ on the nominal TEC value, and a constraint of $80*10^{16}$ on the maximum value. Outside the area defined by the aforementioned values of latitude and longitude, the TEC value is the nominal value.

The single frequency ionospheric error contribution is defined as a function of the TEC value, and is therefore a function of the elevation of the satellite, the latitude, the longitude and the UTC. The double frequency ionospheric error is assumed to be zero.

The total UERE of the satellite is therefore calculated as a function of the elevation of the satellite, the latitude, the longitude and the UTC.

The masking angles of the satellites are functions of the frequency, the latitude, the longitude and the UTC. As regards the frequency, reference R02 shows that, in scintillation conditions, the satellite signals are lost at specific angles of elevation, and that the signal at the frequency L5/E5b is lost for angles of elevation that are higher with respect to the frequency L1. Consequently, starting from large angles of elevation for which the double frequency signal is available, and reducing these angles of elevation, we initially reach the condition in which only a signal at a single frequency, L1, is available, and then the condition in which no signal is available any more.

On the other hand, where the latitude, longitude and UTC are concerned, the dependence of the masking angles on these parameters is manifested by the fact that they are parameters of the TEC function; a rise in the value of the TEC function is accompanied by a rise in the angle of elevation at which the satellite signal is lost.

For each satellite, based on the TEC value and on the associated masking angle, the satellite type is defined as follows:

- "double frequency" satellite, having an ionospheric error of zero;
- "single frequency" satellite (L1), having an ionospheric error dependent on the elevation of the satellite, the latitude, the longitude and the UTC;
- "non-available" satellite, for which both frequencies have been lost, and which is therefore excluded from the visible satellites and from the position solution.

The following additional approach has been defined for a case in which the Galileo integrity channel is available. A single frequency satellite cannot be used for the GIC, and this is also applicable in the case in which there is only one Galileo type single frequency satellite. In these cases, there are various solutions. The first is to use a degraded GIC (26 SIS with a degraded SISMA) combined with the global RAIM algorithm, the latter being used to calculate the lost Galileo satellite. This solution is also used if only one Galileo satellite has been completely lost.

The second solution is applicable in the case in which at least two Galileo satellites are unavailable for the GIC (either because they are of the single frequency type or because they are totally lost). In this second solution, the GIC is declared unavailable, and the global RAIM is applied to the remaining constellation.

Where the scintillation effect is concerned, two types of users are envisaged. The first type represents the user who keeps single frequency satellites in the solution, using the single frequency ionospheric correction model for these: this type of user pays a penalty in terms of accuracy with a benefit in terms of dilution of precision (DOP).

The second type represents the user who excludes the single frequency satellites from the solution: this user pays a penalty in terms of availability, with a benefit in terms of accuracy.

The above scenario comprises all the following parameters, in combination:

- flight phase: NPA Cat-III3b;
- GNSS configuration: GPS L1, GPS L1/L5, Galileo L1/E5b, ...;
- integrity method used: RAIM, GIC, RAIM and GIC combined;
- type of RAIM algorithm: standard, sequential;
- geographic area considered: ECAC, World-wide, specific location;
- time/space grid: analysis step in time (minutes or seconds) and space (degrees of latitude/longitude);
- masking angle;
- number of equations in the navigation solution;
- any degradation: interference, satellites out of service, presence of scintillation.

The simulation algorithm is designed to calculate a set of statistical values, particularly the total number of visible satellites, the dilution of precision (DOP), the levels of integrity, the levels of protection, the levels of exclusion, the accuracy, the percentage of availability of failure detection (FD), the percentage of fault detection availability and fault detection and exclusion availability (FDE) and the percentage of availability of integrity and continuity of the GIC. The dilution of precision (DOP), the integrity levels, the protection levels, the exclusion levels and the accuracy can be of the horizontal or vertical type, and are calculated to at least one predetermined probability value, particularly 95%, 99%, 99.5% and 99.999%. The protection levels can be global or can relate to the sub-constellation range [n-1] to allow for the effect of the removal of a critical satellite. The exclusion levels can allow for single or double exclusion of failure.

The percentage of fault detection availability (FD) and the percentage of fault detection and exclusion availability (FDE) determine the integrity and continuity availability of the system and identify failures in the RAIM with respect to the applicable values of HAL and VAL. The FDE percentage can allow for the case in which one or two satellites have failed, and the resulting value relates to the integrity continuity when the failed satellite or satellites are removed.

The percentage of integrity and continuity availability of the GIC is evaluated with respect to the applicable values of HAL and VAL, calculated by the protection levels method, sharing the permitted GIC integrity risk among predetermined horizontal and vertical values, particularly 98% vertical and 2% horizontal, or by the combined integrity risk method. With both methods, it is possible to carry out a global calculation or a calculation relating to the sub-constellation range [n-1] to allow for the effect of the removal of a critical satellite.

Clearly, the principle of the invention remaining the same, the embodiments and the details of production can be varied considerably from what has been described and illustrated purely by way of non-limiting example, without departing from the scope of protection of the present invention as defined by the attached claims.

### Claims

1. Method for predicting the performance of a satellite navigation system, comprising at least one constellation of satellites for a GNSS receiver, the method comprising the operations of:

- determining first data (5) indicating the requirements of accuracy, continuity, integrity and availability of the system; and
- determining second data (6), indicating the number of satellites in the said at least one constellation and the corresponding probabilities of failure, required for executing a predetermined RAIM method for monitoring the system;

the method being **characterized in that** it also comprises the operations of:

- acquiring from the said receiver third data (Pfa, Pmd), indicating the probability of false alert and the probability of missed detection as a function of the said requirements, for the predetermined RAIM method;
- creating a database (7) of the said third data in accordance with various predetermined scenarios;
- generating (2) data vectors representing the radius of uncertainty concerning the distance of the receiver from the satellites, which can be determined by the receiver as a function of the said first (5), second (6) and third (Pfa, Pmd) data, and creating a database (9) of the said vectors;
- executing a simulation of at least one of the said scenarios on the basis of the said vectors.

2. Method for predicting the performance of a satellite navigation system according to Claim 1, in which the said scenarios comprise phases of navigation, particularly the phases of take-off, remote navigation, approach and landing of an aircraft.

3. Method for predicting the performance of a satellite navigation system according to Claim 1 or 2, in which the operation of generating (2) data vectors comprises the phases of:

- setting predetermined probabilities of false alert and missed detection in a state equation of the system;
- solving the said equation, deriving a normalized radius of uncertainty;
- multiplying the said normalized radius by the standard deviation of the satellite error, to obtain absolute radii of uncertainty;
- determining integrity limits and exclusion limits on the basis of the said absolute radii.

4. Method for predicting the performance of a satellite navigation system according to Claim 3, in which the said absolute radii of uncertainty are projected in the horizontal and vertical directions to find the said horizontal and vertical integrity limits (HIL, VIL) respectively, and the said horizontal and vertical exclusion limits (HEL, VEL) respectively.

5. Method for predicting the performance of a satellite navigation system according to any one of the preceding claims, additionally comprising the operation of:

- importing all the vectors from the database (9).

6. Method for predicting the performance of a satellite navigation system according to any one of the preceding claims, additionally comprising the operation of:

- exporting all the vectors to the database (9).

7. Method for predicting the performance of a satellite navigation system according to any one of the preceding claims, additionally comprising the operation of:

- executing an operation of manual reading from the vectors database (9).

8. Method for predicting the performance of a satellite navigation system according to any one of the preceding claims, additionally comprising the operation of:

- executing an operation of manual writing to the vectors database (9).

9. Method for predicting the performance of a satellite navigation system according to any one of the preceding claims, additionally comprising the operation of:

- acquiring data for predicting the visible satellites for the GPS constellation.

10. Method for predicting the performance of a satellite navigation system according to any one of the preceding claims, additionally comprising the operation of:

- acquiring data for predicting the visible satellites for the Galileo constellation.

11. Method for predicting the performance of a satellite navigation system according to any one of the preceding claims, additionally comprising the operation of:

- acquiring data for predicting the visible satellites for the SBAS constellation.

12. Method for predicting the performance of a satellite navigation system according to any one of Claims 9 to 11, additionally comprising the operations of:

- calculating the dilution of precision (DOP);
- calculating the position accuracy in the case of combined PVT constellations (26);
- calculating observation (H) and weight (W) matrices, using data indicating the standard deviation of the user equivalent range error (UERE) at the resulting angle of elevation of the satellite, and data from the calculation of the UERE at the resulting angle of elevation of the satellite in case of scintillation, the calculation of the standard deviation of the UERE using data from the calculation of the standard deviation of the user equipment error (UEE) at the resulting angle of elevation of the satellite, and the calculation of the UERE in case of scintillation using the data indicating the standard deviation of the user equivalent range error (UERE) and data from the calculation of the current value of the total electron content;
- calculating protection limits for a Galileo integrity channel (GIC), using the data from the calculation of the standard deviation of the user equipment error (UEE), horizontal integrity risk data for the Galileo integrity channel for a given horizontal alarm limit (HAL), and vertical integrity risk data for the Galileo integrity channel for a given vertical alarm limit (VAL).

13. Method for predicting the performance of a satellite navigation system according to Claim 12, in which the protection limits are horizontal and vertical (HPL, VPL) respectively.

14. Method for predicting the performance of a satellite navigation system according to Claim 12, additionally comprising the operation of:

- calculating protection limits for the GPS/SBAS constellation.

15. Method for predicting the performance of a satellite navigation system according to Claim 12, additionally comprising the operation of:

- combining the results of the Galileo integrity channel and those of the RAIM method in the case of combined PVT constellations.

16. Method for predicting the performance of a satellite navigation system according to Claim 12, additionally comprising the operation of:

- combining the results of the Galileo integrity channel and those of the RAIM method in the case of raw-pseudorange-combined constellations.

17. Method for predicting the performance of a satellite navigation system according to Claim 12, additionally comprising the operation of:

- combining the results of the Galileo integrity channel and those of the RAIM method in the case of a single constellation.

18. Method for predicting the performance of a satellite navigation system according to Claim 12, additionally comprising the operation of:

- combining the results of the RAIM method in the case of combined PVT constellations.

**19.** Method for predicting the performance of a satellite navigation system according to Claim 12, additionally comprising the operation of:

- combining the results of the RAIM method, the Galileo integrity channel and the SBAS constellation in the case of combined PVT constellations.

**20.** Method for predicting the performance of a satellite navigation system according to any one of Claims 3 to 19, in which the constellation is single and the number of unknowns in the solution of the state equation of the system are the three spatial coordinates of the GNSS receiver and the difference between a clock associated with the said GNSS receiver and a clock associated with the satellites.

**21.** Method for predicting the performance of a satellite navigation system according to any one of the preceding claims, additionally comprising the operation of:

- excluding a satellite from the constellation by selecting an identification code of the said satellite.

**22.** Method for predicting the performance of a satellite navigation system according to Claim 21, additionally comprising the operation of:

- setting a degraded value of the signal in space monitoring accuracy (SISMA).

**23.** Computer system for predicting the performance of a satellite navigation system, programmed to implement a method according to any one of Claims 1 to 22.

**24.** Computer program or group of programs executable by a computer system, comprising one or more code modules for implementing a method for predicting the performance of a satellite navigation system according to any one of Claims 1 to 22.

# FIG.1

# FIG.2

# FIG.3

GRAPHIC INTERFACE ~14

8

TEXT

$T_p$ VECTORS DATABASE

9

IMPORT ~10

EXPORT ~11

READ ~12

WRITE ~13

# FIG.4

# FIG.5

# FIG.6

**European Patent Office**

# EUROPEAN SEARCH REPORT

Application Number

EP 07 42 5114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZINK T ET AL: "Analyses of Integrity Monitoring Techniques for a Global Navigation Satellite System (GNSS-2)" 26 June 2000 (2000-06-26), ION ANNUAL MEETING, XX, XX, PAGE(S) 117-127 , XP002343913 p. 119 - p. 121 "Adapted RAIM algorithm" p. 121 - p. 122 "GIC contribution to user integrity monitoring" p. 122 - p. 123 "Galileo hybridization ..." p. 123 - p. 124 "Adapted RAIM algorithm..." | 1-24 | INV. G01S1/00 |
| A | US 2004/220733 A1 (PASTUREL PATRICE KNUT [US] ET AL) 4 November 2004 (2004-11-04) * the whole document * | 1-24 | |
| A | GB 2 380 819 A (LOIZOU JOHN DEMETRIOS [GB]; VEGA GROUP PLC [GB]) 16 April 2003 (2003-04-16) * the whole document * | 1-24 | TECHNICAL FIELDS SEARCHED (IPC)<br><br>G01S |
| A | BROWN R G: "A BASELINE GPS RAIM SCHEME AND A NOTE ON THE EQUIVALENCE OF THREE RAIM METHODS" NAVIGATION, PARIS,, FR, vol. 39, no. 3, 1992, pages 301-316, XP000198246 ISSN: 0028-1530 RAIM algorithms basics * the whole document * | 1-24 | |

The present search report has been drawn up for all claims

| Place of search | Date of completion of the search | Examiner |
|---|---|---|
| Munich | 7 August 2007 | GONZALEZ MORENO, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 42 5114

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2007

| Patent document cited in search report | Publication date | Patent family member(s) | Publication date |
|---|---|---|---|
| US 2004220733 A1 | 04-11-2004 | US 2005096844 A1 | 05-05-2005 |
| GB 2380819 A | 16-04-2003 | NONE | |

EPO FORM P0459

For more details about this annex : see Official Journal of the European Patent Office, No. 12/82